**Europäisches Patentamt**

**European Patent Office**

**Office européen des brevets**

(11) Publication number: **0 355 886**

**A1**

## EUROPEAN PATENT APPLICATION

(21) Application number: **89201982.9**

(22) Date of filing: **28.07.89**

(51) Int. Cl.⁴: **C02F 1/00 , C02F 5/02**

A request for correction of the description and the claims has been filed pursuant to Rule 88 EPC. A decision on the request will be taken during the proceedings before the Examining Division (Guidelines for Examination in the EPO, A-V, 2.2).

(30) Priority: **23.08.88 NL 8802077**

(43) Date of publication of application:
**28.02.90 Bulletin 90/09**

(84) Designated Contracting States:
**AT BE CH DE ES FR GB GR IT LI LU NL SE**

(71) Applicant: **DHV Raadgevend Ingenieursbureau BV**
**Laan 1914 nr. 35**
**NL-3818 EX Amersfoort(NL)**

(72) Inventor: **Van Dijk, Johannis Cornelis**
**Rossenberglaan 9**
**NL-3833 BV Leusden(NL)**

(74) Representative: **Kupecz, Arpad et al**
**Octrooibureau Los en Stigter B.V. Postbox 20052**
**NL-1000 HB Amsterdam(NL)**

(54) **A process for chemical softening of water with the crystallization method in a grain reactor.**

(57) The present invention relates to a process for chemical softening of water with the crystallization method in a pellet reactor, whereby water in the presence of a crystallization promoting seeding material is mixed with a separately injected alkaline agent which crystallizes the hardness components on the seeding material.

A characteristic feature of the invention is that a part of the water to be softened is softened deeply in the reactor, which is provided with the seeding material of a suitable grain size, and the softened water thus treated is mixed up with not softened water outside the reactor in such a ratio, that the resulting mixed water has the desired hardness.

The grain size of the seeding material is usually from 0,1 to 0,8 mm and preferably from 0,2 to 0,4 mm, whereas the size of the pellets to be removed from the reactor is 0,8 - 3 mm and preferably 0,8 - 1,2 mm.

EP 0 355 886 A1

## A process for chemical softening of water with the crystallization method in a grain reactor.

The present invention relates to a process for chemical softening of water with the crystallization method in a grain reactor, whereby water in the presence of a crystallization promoting graft material is mixed with a separately injected alkaline agent which crystallizes the hardness components on the graft material.

Such a process is known from the Netherlands patent specification 153,501. According to the known process the water to be softened is treated in its entirety in the grain reactor with the alkaline agent.

Although the known process provides satisfactory results with respect to the required softening, a number of drawbacks appear to cling to the known method in practice.

In the first place the known method is costly, since it appeared that an excess of the alkaline agent is necessary for softening the water which is carried through the reactor.

Moreover the softened water which leaves the reactor, should be brought on the equilibrium-pH with acid before the water may be used.

Finally relatively large reactors and filters are required because the total output is treated.

It is observed that the costs coupled with the water softening in a grain reactor are almost completely determined by the costs of the used chemicals, reactors and filters.

The present invention now contemplates to provide a process, by which the above-mentioned drawbacks are removed in an efficient manner.

To this end the present invention provides a process for chemical softening of water with the crystallization method in a grain reactor, whereby water in the presence of a crystallization promoting graft material is mixed with a separately injected alkaline agent, which crystallizes the hardness components on the graft material, characterized in that a part of the water to be softened in the reactor, which is provided with the graft material of a suitable grain size, is softened deeply and the softened water thus treated is mixed up with not softened water outside the reactor in such a ratio that the resulting mixed water has the desired hardness.

In practice it appeared that it is often not necessary to remove substantially all hardness components, notably calcium, from the water, although this is technically possible in a grain reactor.

Thus the water to be softened may have a Ca-hardness of 3 mmoles/l. For instance, it is required that this crude water is softened to a Ca-hardness of 1,5 mmoles/l. Technically, however, it is possible to soften this crude water to a Ca-hardness of 0,2 mmoles/l.

Surprisingly it has now been found that according to the present invention it suffices to soften a part of the water with a Ca-hardness of 3 mmoles/l deeply, namely to 0,2 mmoles/l and subsequently to mix the thus deeply softened water outside the reactor up with the crude water with a Ca-hardness of 3 mmoles/l thus providing water which has finally the required Ca-hardness of 1,5 mmoles/l.

According to this example only 54% of the water should be treated in the reactor, to which 46% untreated water is added outside the reactor, providing water with the required Ca-hardness of 1,5 mmoles/l.

Since now only about half of the crude water is carried through the grain reactor, this means that according to the invention one has to do with only a much smaller output, which implies that one may suffice with much smaller reactors. Still more important, however, is that in this manner a significant saving is obtained of the alkaline agent like lye, lime milk or sodium carbonate, which is to be called surprising.

One and the other may be elucidated as follows.

1. Neutralization of $CO_2$ is only necessary in the partial stream, which is softened deeply. In practice this provides a saving of 0,1-0,2 mmoles/l of alkaline agent.

2. Usually an excess of the alkaline agent of 0,15 mmoles/l is required which excess, however, is only necessary for that part of the crude water, which is passed through the reactor.

3. After mixture with the crude water the water obtained is substantially balanced. This is a very important aspect and a property of the lime-carbonic acid equilibrium, to wit $CaCO_3 + CO_2 + H_2O \rightleftharpoons Ca^{2+} + 2\ HCO_3^-$. On mixture of hard water with soft water generally the so-called aggressive water arises, that is with a pH of less than the equilibrium-pH. Thus on mixing deeply softened water with not-softened water the excess is lost and that is exactly what is desired, to wit, that the water is in equilibrium.

Further there is obtained in a surprising manner a saving in the acid consumption (HCl or $H_2SO_4$, pH-correction passed reactor), which is surprising, too.

Normally the pH-correction is necessary in order to counteract supersaturation as well as deposition. It is observed that $CO_2$ in the crude water serves as an acid.

Moreover it is surprising that there is less carry-over and that therefore the filter load is less. It is observed that the carry-over is almost independent of the depth of the softening as well as of the excess.

As mentioned hereinabove the costs of softening are mainly determined by the costs of chemicals, reactors and filter, which means that the above-mentioned advantages are of particularly large importance for the effective and inexpensive softening of water.

As alkaline agent is preferably used lye or lime milk. $Na_2Co_3$ may be used as alkaline agent, too.

For obtention of good results with minimal costs it is further important to pay attention to the grain bed. Thereto this grain bed comprises suitable graft materials, like, for instance, sand, garnet sand, marble (calcium carbonate) and dolomite (calcium magnesium carbonate). For it appeared that according to the invention the process yield, in a given case the costs of chemicals of the grain reactors, is favourably influenced by an optimal bed control. Namely it appeared that the grain diameter of the graft material and of the grain obtained after the softening is particularly important for attaining the above-mentioned object. Smaller grains have a larger specific surface and thus a higher yield.

The grain size of the graft material usually amounts to 0,1-0,8 mm, and preferably to 0,2-0,4 mm. The grains obtained after the softening are usually removed from the reactor when they did increase to a size of 0,8-3 mm, although a grain size of 0,8-1,2 mm is preferred.

When the steps below are taken into consideration, still more stable and profitable results may be obtained according to the invention.

Thus by enlargement (cone) of the upper cylindrical part of the reactor, for instance, a more stable current is obtained, so that thus only large grains are removed.

Further it is important that draining of the grains takes place in the lower part of the reactor, so that thus only large grains are removed.

Further the efficiency of the present method is favourably influenced, when draining the grains and feeding the graft material is automatized with the result that by frequent draining/feeding small amounts of grains the grain diameter in a reactor may be kept within narrow margins.

The process according to the invention is now further elucidated by the following non-limitative example.

## Example

Crude water with the composition following hereinbelow is softened according to the usual method (comparative test) and according to the invention in the manner indicated herein below.

| Composition of the water to be softened: | | |
|---|---|---|
| temperature | (Centigrade) | : 10,00 |
| ionic strength | (mmoles/l) | : 12,00 |
| calcium | (mmoles/l) | : 2,80 |
| pH | | : 7,20 |
| m-value | (mmoles/l) | : 6,00 |
| p-value | (mmoles/l) | : -1,00 |
| $CO_2$ | (mmoles/l) | : 1,01 |
| $HCO_3$ | (mmoles/l) | : 5,99 |
| $CO_3$ | (mmoles/l) | : 0,00 |
| bufferindex | (mmoles/1.pH) | : 2,23 |
| saturation index | | : 0,06 |
| supersaturated $CaCO_3$ | (mmoles/l) | : 0,08 |

## Comparative test (softening according to the usual method)

In order to soften this water to 1,16 mmoles/l Ca is required 2,50 mmoles/l NaOH, the softened water then comprising 0,15 mmoles/l supersaturated $CaCO_3$, which should be neutralized using 0,15 mmoles/l HCl (see table hereinbelow).

| Water quality after the treatment according to the invention | | | | | | | | |
|---|---|---|---|---|---|---|---|---|
| Added amount (1) NaOH | | | | | | | | |
| Conditions: | | | | | | | | |
| A: after addition<br>B: after precipitation till equilibrium<br>C: after precipitation till 0,15 mmoles/l supersaturated $CaCO_3$ | | | | | | | | |
| Dosages and concentrations in (mmoles/l) | | | | | | | | |
| <1> | ionic strength | Ca | p | m | pH | BI | SI | |
| 2,00 | 14,99 | 2,80 | 1,00 | 8,00 | 9,55 | 2,44 | 2,38 | <A> |
| | 9,72 | 1,37 | -0,43 | 5,14 | 7,50 | 1,04 | -0,00 | <B> |
| | 10,18 | 1,52 | -0,28 | 5,44 | 7,70 | 0,73 | 0,27 | <C> |
| 2,50 | 16,53 | 2,80 | 1,50 | 8,50 | 9,75 | 3,41 | 2,54 | <A> |
| | 9,70 | 1,01 | -0,29 | 4,93 | 7,65 | 0,74 | 0,00 | <B> |
| | 10,16 | 1,16 | -0,14 | 5,23 | 7,95 | 0,44 | 0,38 | <C> |
| 3,00 | 17,69 | 2,80 | 2,00 | 9,00 | 9,92 | 4,25 | 2,66 | <A> |
| | 9,25 | 0,65 | -0,15 | 4,69 | 7,87 | 0,46 | 0,00 | <B> |
| | 9,74 | 0,80 | -0,00 | 4,99 | 8,37 | 0,28 | 0,62 | <C> |
| 3,50 | 18,85 | 2,80 | 2,50 | 9,50 | 10,06 | 4,92 | 2,74 | <A> |
| | 8,81 | 0,72 | -0,03 | 4,44 | 8,26 | 0,26 | 0,00 | <B> |
| | 9,35 | 0,42 | 0,12 | 4,74 | 8,84 | 0,40 | 0,77 | <C> |

## Softening according to the invention

A final hardness of 1,16 mmoles/l Ca may also be reached by softening a partial stream of 64% deeply to 0,42 mmoles/l Ca. To this end 3,50 mmoles/l NaOH is required in the partial stream, while then the mixed softened water still comprises only 0,04 mmoles/l supersaturated $CaCO_3$, which should be neutralized using 0,04 mmoles/l HCl (see table hereinbelow).

| Temperature | (Centigrade) | : 10,00 |
|---|---|---|
| Ionic strength | (mmoles/l) | : 10,80 |
| Calcium | (mmoles/l) | : 1,16 |
| OH | | : 7,68 |
| m-value | (mmoles/l) | : 5,19 |
| p-value | (mmoles/l) | : -0,28 |
| $CO_2$ | (mmoles/l) | : 0,29 |
| $HCO_3$ | (mmoles/l) | : 5,17 |
| $CO_3$ | (mmoles/l) | : 0,01 |
| Bufferindex | (mmoles/l.pH) | : 0,74 |
| Saturation index | | : 0,10 |
| Supersaturated $CaCO_3$ | (mmoles/l) | : 0,04 |

Summarizing the following advantages are reached with partial stream treatment, that is according to the invention:

1. Savings in the base consumption (NaOH, $Ca(OH)_2$ or $Na_2CO_3$) as consequence of:
- excess dosage is only necessary in partial stream - neutralization of $CO_2$ is only necessary in partial stream

In the example the NaOH consumption is only 0,64 x 3,50 = 2,24 mmoles/l instead of 2,50 mmoles/l, thus a saving of 0,26 mmoles/l.

2. Savings in acid consumption (HCl or $H_2SO_4$) which is required to neutralize the excess. In the example the HCl consumption is only 0,04 mmoles/l instead of 0,15 mmoles/l, thus a saving of 0,11 mmoles/l. In practice the acid dosage may often be completely left out in a partial stream treatment.

3. Savings in reactor volume, because only a partial stream is treated. In the example the partial stream percentage is 64, thus a saving in the required reactor volume of 36%.

4. Savings in filter volume because the carry-over arises only in the deeply softened partial stream and is almost independent of the softening range. In the example the partial stream percentage is 64, thus the savings in carry-over, filter load and filter volume is about 36%.

**Claims**

1. A process for chemical softening of water with the crystallization method in a grain reactor, whereby water in the presence of a crystallization promoting graft material is mixed with a separately injected alkaline agent which crystallizes the hardness components on the graft material, characterized in that a part of the water to be softened in the reactor, which is provided with the graft material of a suitable grain size, is softened deeply and the softened water thus treated is mixed up with not softened water outside the reactor in such a ratio, that the resulting mixed water has a desired hardness.

2. A process according to claim 1, characterized in that lye is used as the alkaline agent.

3. A process according to claim 1, characterized in that lime milk is used as the alkaline agent.

4. A process according to claim 1, characterized in that soda is used as the alkaline agent.

5. A process according to claims 1-4, characterized in that the grain size of the graft material is from 0,1 to 0,8 mm.

6. A process according to claim 5, characterized in that the grain size of the graft material is from 0,2 to 0,4 mm.

7. A process according to claims 1-6, characterized in that grains with crystallized hardness components thereon with a grain size of 0,8 to 3 mm are removed from the reactor.

8. A process according to claim 7, characterized in that particles with a grain size of 0,8 to 1,2 mm are removed.

9. A process according to claims 1-8, characterized in that the softening is executed in a grain reactor, the upper cylindrical part of which is widened.

10. A process according to claims 1-8, characterized in that the grains draining and the graft material feeding are automatized.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 029 194 (CILLICHEMIE et al.) * Pages 4-7 * | 1 | C 02 F 1/00 C 02 F 5/02 |
| A | US-A-4 277 343 (J.D. PAZ) * Column 5, line 59 - column 6, line 12 * | 1-3 | |
| A | FR-A-2 410 633 (CGR-MeV) * Pages 5-6 * | 1 | |

TECHNICAL FIELDS SEARCHED (Int. Cl.5)

C 02 F

The present search report has been drawn up for all claims

| Place of search | Date of completion of the search | Examiner |
|---|---|---|
| THE HAGUE | 08-11-1989 | VAN AKOLEYEN H.T.M. |